# EUROPEAN PATENT APPLICATION

(11) **EP 3 725 598 A1**
(43) Date of publication of application: **21.10.2020**
(21) Application number: 18888858.0
(22) Date of filing: 10.12.2018
(51) Int. Cl.: B60R 16/037

(54) **IDENTITY RECOGNITION-BASED VEHICLE CONTROL SYSTEM AND METHOD**

(30) Priority: 15.12.2017 CN 201711352676
(71) Applicant: Nio Nextev Limited, Hong Kong (CN)
(72) Inventor: LUO, Xi, Shanghai 201804 (CN); SHEN, Fangzhu, Shanghai 201804 (CN)
(74) Representative: Patentwerk B.V.
(86) International application number: PCT/CN2018/120097
(87) International publication number: WO 2019/114660

(57) **Abstract**

Disclosed are a vehicle control system and method based on identity recognition, a processing device, and a storage device. The vehicle control system comprises a target body signal acquisition module (1), an identity recognition module (2), a control module (3), and a vehicle regulation module (4). The target body signal acquisition module (1) is configured to acquire a signal of a target body, the identity recognition module (2) is configured to recognize an account bound to the target body, the control module (3) is configured to send an instruction to the vehicle regulation module (4) according to the account recognized by the identity recognition module (2), and the vehicle regulation module (4) is configured to receive and execute the instruction sent by the control module (3). The account is a pre-created account capable of being bound to the target body. A vehicle is controlled according to user preference setting data and the like corresponding to a vehicle account to satisfy different requirements of different users for the same vehicle during use, without requiring the users to manually modify a scene status and the like of the vehicle, thereby improving the usage experience of the users.

## Description

### Technical Field

The invention relates to the technical field of automotive electronic communications, and in particular to a vehicle control system and method based on identity recognition.

### Background Art

Automobiles have gradually become an indispensable part of people's daily life. With the rapid development of the automotive electronic industry, individual users impose new requirements on the personalization and intelligence of the automobiles. Currently, the automobiles are also increasingly shared during use, such that the same automobile may be used by different users. Because the different users have different operating habits, the users often regulate a steering wheel, a seat position, the position of a rearview mirror, and the like according to personal preference when using the automobile. When a new user uses the automobile, the new user needs to regulate the steering wheel, the seat position, the position of the rearview mirror, and the like again according to personal preference. Such operations are too tedious and greatly compromise the user experience. In addition, different users have different usage requirements for a vehicle, for example, a vehicle owner expects other users to have different usage permission. Therefore, how to restrict the usage permission of the other users is also a technical problem to be solved urgently in the art.

Based on this, the invention is particularly provided.

### Summary of the Invention

In order to solve the above problem in the prior art to satisfy different requirements of different uses for a vehicle, the invention provides a vehicle control system based on identity recognition. The vehicle control system comprises a target body signal acquisition module, an identity recognition module, a control module, and a vehicle regulation module, the target body signal acquisition module being configured to acquire a signal of a target body; the identity recognition module being configured to recognize, according to the signal acquired by the target body signal acquisition module, an account bound to the target body; the control module being configured to send an instruction to the vehicle regulation module according to the account recognized by the identity recognition module; and the vehicle regulation module being configured to receive and execute the instruction sent by the control module, wherein the account is a pre-created account capable of being bound to the target body.

In a preferred embodiment of the above vehicle control system, the target body is a vehicle key or a user terminal, and the target body signal acquisition module detects a signal sent by the vehicle key or the user terminal, thus acquiring the signal of the target body.

In a preferred embodiment of the above vehicle control system, the account is preset with at least a user preference setting; the control module sends the instruction to the vehicle regulation module according to the preference setting; and the vehicle regulation module sends a regulation signal to a device to be regulated in a vehicle according to the instruction sent by the control module, so that the device to be regulated performs corresponding regulation.

In a preferred embodiment of the above vehicle control system, the account comprises at least a primary account and a secondary account, the primary account and the secondary account being preset with a default preference setting; or the primary account and the secondary account being preset with a customized preference setting.

In a preferred embodiment of the above vehicle control system, the account further comprises a guest account, when the guest account is activated, the control module sending the instruction to the vehicle regulation module according to the guest account if the identity recognition module has not recognized the account bound to the target body and the target body is valid.

In a preferred embodiment of the above vehicle control system, the vehicle control system further comprises an account management module, the account management module being configured to create or close the secondary account, and assign user usage permission to the primary account/secondary account/guest account and/or preset a user preference setting for the primary account/secondary account/guest account.

In a preferred embodiment of the above vehicle control system, the vehicle control system further comprises a binding module, the binding module being configured to establish or disconnect a binding relationship between the target body and a pre-created account.

The invention further provides a vehicle control method based on identity recognition, the vehicle control method comprising the following steps: acquiring a signal of a target body; recognizing, according to the signal, an account bound to the target body; and controlling, according to the account, a vehicle to perform a corresponding operation, wherein the account is a pre-created account capable of being bound to the target body.

In a preferred embodiment of the above vehicle control method, the target body is a vehicle key or a user terminal, and the step of "acquiring a signal of a target body" specifically comprises: detecting a signal of the vehicle key or the user terminal; and using the detected signal of the vehicle key or the user terminal as the signal of the target body.

In a preferred embodiment of the above vehicle control method, the step of "controlling, according to the account, a vehicle to perform a corresponding operation" specifically comprises: acquiring a preset user preference setting of the account; and controlling a device to be regulated in the vehicle according to the preference setting to perform corresponding regulation.

In a preferred embodiment of the above vehicle control method, before the "acquiring a signal of a target body", the vehicle control method further comprises: presetting a user preference setting for a pre-created account.

In a preferred embodiment of the above vehicle control method, the account comprises at least a primary account and a secondary account, the primary account and the secondary account being preset with a default user preference setting; or the primary account and the secondary account being preset with a customized user preference setting.

In a preferred embodiment of the above vehicle control method, the step of "recognizing, according to the signal, an account bound to the target body" specifically comprises: determining, if the account bound to the target body has not been recognized, whether the target body is valid; and using, if the target body is valid, a guest account as the account bound to the target body; or rejecting, if the target body is not valid, an operation of the target body, wherein the guest account is a preset account with fixed permission.

In a preferred embodiment of the above vehicle control method, before the "acquiring a signal of a target body", the vehicle control method further comprises: binding the pre-created account to the target body.

The invention further provides a processing device, comprising a processor and a storage apparatus, the processor being adapted to execute various programs; and the storage apparatus being adapted to store a plurality of programs, wherein the programs are adapted to be loaded and executed by the processor to implement the above vehicle control method.

The invention further provides a storage device in which a plurality of programs are stored, wherein the programs are adapted to be loaded and executed by a processor to implement the above vehicle control method.

In the technical solutions of the invention, a vehicle account is pre-created, then a target body is bound to the vehicle account, and an account bound to the target body is determined according to a signal of the target body, so that a vehicle is controlled according to data corresponding to the vehicle account such as user preference setting data to satisfy different requirements of different users for the same vehicle during use, without requiring the users to manually modify a scene status and the like of the vehicle, thereby improving the usage experience of the users. In addition, according to the invention, different accounts are further created, and different usage permission is assigned to the accounts, so that the different users of the vehicle can be bound to the different accounts to realize unified management of usage permission of the different users and meet different requirements of the different users.

### Brief Description of the Drawings

FIG. 1 is a schematic structural diagram of a vehicle control system based on identity recognition of the invention; and
FIG. 2 is a flowchart of a vehicle control method based on identity recognition of the invention.

### Detailed Description of Embodiments

To make the technical solutions and advantages of the embodiments of the invention clearer, the technical solutions of the invention will be described clearly and completely with reference to the accompanying drawings. Obviously, the embodiments are only some, rather than all of the embodiments of the invention. It should be understood by those skilled in the art that these embodiments are only for explaining the technical principles of the invention and are not intended to limit the scope of protection of the invention.

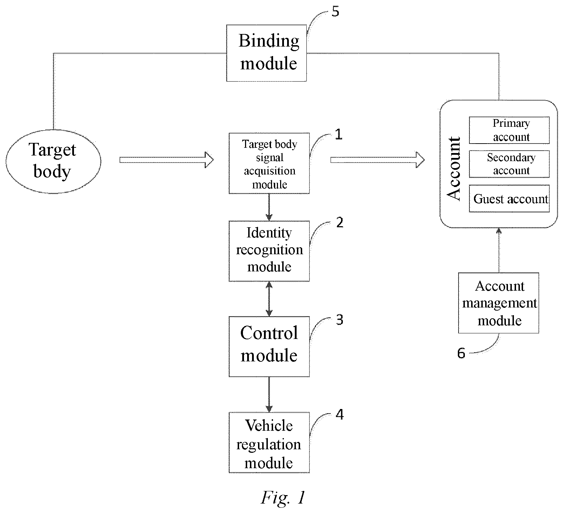

First, referring to FIG. 1, FIG. 1 is a schematic structural diagram of a vehicle control system based on identity recognition of the invention. As shown in FIG. 1, the vehicle control system of the invention comprises a target body signal acquisition module 1, an identity recognition module 2, a control module 3, and a vehicle regulation module 4. The target body signal acquisition module 1 is configured to acquire a signal of a target body. The identity recognition module 2 is configured to recognize, according to the signal acquired by the target body signal acquisition module 1, an account ID bound to the target body. The control module 3 is configured to send an instruction to the vehicle regulation module 4 according to the account ID recognized by the identity recognition module 2. The vehicle regulation module 4 is configured to receive and execute the instruction sent by the control module, so that a device to be regulated in a vehicle is regulated accordingly according to a user preference setting.

It should be noted that the above account is a pre-created account bound to the target body. The account is a necessary condition for vehicle unlocking, and a plurality of accounts may be set for each vehicle. In an example of the invention, a primary account is set for each vehicle. In addition to the primary account, a user of the primary account may set several secondary accounts. When the vehicle is unlocked by using different accounts (a primary account, a secondary account, and a guest account below), the vehicle has usage permission of a corresponding account (the primary account has maximum usage permission by default because the primary account is usually an account used by a vehicle owner, usage permission of the secondary account may be customized and assigned by a user (usually the vehicle owner) of the primary account, and the guest account is described below). The target body can be understood as a tool for unlocking the vehicle, and the tool may be a vehicle key, a user terminal (such as a mobile phone or a tablet), or any other apparatus capable of unlocking the vehicle. For example, the target body is a vehicle key. If a binding relationship between the vehicle key and a certain secondary account is established, when the user approaches the vehicle with the vehicle key, the identity recognition module can recognize, according to a signal of the vehicle key, a secondary account ID bound to the vehicle key, the control module sends the instruction to the vehicle regulation module according to a setting (such as a user preference setting or vehicle usage permission) corresponding to the secondary account ID, and the vehicle regulation module then executes the instruction sent by the control module.

As an example, the target body is a vehicle key. In this case, the target body signal acquisition module may be a component that receives a vehicle key opening signal, or the target body signal acquisition module may be integrated into the component of the vehicle key opening signal, or the target body signal acquisition module may be flexibly arranged in the vehicle as an independent module, or the target body signal acquisition module may be integrated into a vehicle central control system, or the like. As an example, each of the identity recognition module, the control module, and the vehicle regulation module may be integrated into a controller of the vehicle central control system, or may be flexibly arranged in the vehicle as an independent module. In addition, the target body signal acquisition module, the identity recognition module, the control module, and the vehicle regulation module mentioned in the invention may be integrated into an ECU of the vehicle as part of the ECU of the vehicle. Alternatively, these modules may be separately integrated as a "controller", account information is acquired by using the "controller" to regulate a device to be regulated in the vehicle, and the "controller" may be flexibly arranged inside the vehicle as a separate individual, or may be integrated into the vehicle central control system as an individual. Those skilled in the art can also make other structural changes in any form based on the theory of the invention, without departing from the scope of protection of the invention.

As described above, according to the invention, a vehicle account is pre-created, so that different accounts have different usage permission and different user preference settings, then a target body is bound to the vehicle account, and an account ID bound to the target body is determined according to a signal of the target body, so that a vehicle is controlled according to usage permission and a user preference setting corresponding to the vehicle account ID to satisfy different requirements of different users for the same vehicle during use, without requiring the users to manually modify a scene status and the like of the vehicle, thereby improving the usage experience of the users.

As an example, sill taking a vehicle key as an example, when the vehicle key is being bound to an account, the vehicle key may be placed in a specific area in the vehicle (such as a front cup holder in the vehicle), and after a signal of the vehicle key is recognized, the user may view/change an account ID bound to the vehicle key on a human-machine interaction interface. For example, after the account ID bound to the vehicle key is changed, the cloud delivers user preference setting data corresponding to a changed account ID. When the user approaches the vehicle with the vehicle key for unlocking, the identity recognition module recognizes the account ID corresponding to the vehicle key according to the signal of the vehicle key, and then the control module controls the vehicle regulation module to perform a corresponding operation according to the user preference setting.

In a specific embodiment, the preset user preference setting in the pre-created account comprises a steering wheel, a seat, a rearview mirror, an auxiliary function of the vehicle, and the like, and the vehicle regulation module may regulate the steering wheel, the seat, the rearview mirror, and the auxiliary function of the vehicle accordingly according to the user preference setting, to satisfy usage requirements of different users and the like. The auxiliary function of the vehicle may involve regulation of an onboard audio, regulation of an onboard air conditioner, driving assistance, light preference (such as an atmosphere light or a wheel eyebrow light), regulation of a trunk height, vehicle performance (such as electric power assisted steering, a driving mode, 100-kilometer acceleration, or braking energy recovery), and the like. The user preference setting may be preset in accounts bound to different users. As such, when the different users use the vehicle, an account ID corresponding to a user is first activated, and then the vehicle may automatically set the steering wheel, the seat, the rearview mirror, the onboard audio, the onboard air conditioner, and the like according to a usage habit of the user corresponding to the account ID, thereby avoiding the tedious operations of manual regulation by the user and improving the usage experience of the user.

Still referring to FIG. 1, the vehicle control system of the invention further comprises a binding module 5 and an account management module 6. The binding module 5 is configured to establish or disconnect a binding relationship between the target body and a pre-created account. The account management module 6 is configured to create or close the secondary account, and assign permission to the created primary account/secondary account (and the guest account below) and preset a user preference setting for the created primary account/secondary account (in some examples, it can be understood that there is only one primary account, and the primary account is provided in the vehicle when the vehicle is at delivery and cannot be closed). For example, when the vehicle owner (the vehicle owner is the user of the primary account in this case) lends the vehicle to a user A, the vehicle owner needs to restrict usage permission of the user. In this case, a secondary account may be created, then usage permission is assigned to the secondary account, and the secondary account is bound to a vehicle key, a mobile phone, and the like of the user A. When the user A uses the vehicle key or the mobile phone to unlock the vehicle, the control module 3 can restrict some functions of the vehicle according to the secondary account corresponding to the user A (for example, the user A is not allowed to use the 100-kilometer acceleration function). In this way, different accounts are created, and different usage permission is assigned to the accounts, so that the different users of the vehicle can be bound to the different accounts to realize unified management of usage permission of the different users and meet different requirements of the different users. It should be noted that although the primary account is usually provided in the vehicle when the vehicle is at delivery, the vehicle owner can also set preference for the primary account. Because the primary account is usually an account of the vehicle owner, the primary account generally has maximum usage permission by default (the user of the primary account may also disable some permission of the primary account). In other words, the primary account and the secondary account of the invention may be flexibly configured.

In a specific embodiment, when creating the secondary account, the vehicle owner usually does not know driving preference of a user, that is, user preference cannot be set for the user. In this case, the created secondary account is preset with a default preference setting (that is, the steering wheel, the seat, the rearview mirror, the auxiliary function of the vehicle, and the like in the vehicle are set according to best effects obtained through an experiment). After the specific user A unlocks the vehicle by using a created secondary account M, a vehicle usage habit of the user A is recorded in the secondary account M. As such, because the vehicle usage habit of the user A is recorded in the secondary account M (the vehicle usage habit overrides a default preference setting in the secondary account M), when the user A unlocks the vehicle again by using the secondary account M, the vehicle is regulated accordingly according to the vehicle usage habit of the user A. Certainly, the default preference setting may also be preset in the primary account. The principle of the default preference setting in the primary account is the same as that of the secondary account, and will not be described herein again.

In a more specific embodiment, in addition to the primary account, a guest account may be provided in the vehicle when the vehicle is at delivery. The guest account supports one-click activation/deactivation, and when the guest account is activated, the control module 3 sends the instruction to the vehicle regulation module according to the guest account if the identity recognition module 2 has not recognized the account bound to the target body and the target body is valid (an unlock operation of the target body is rejected if the target body is not valid). For example, if the vehicle owner lends the vehicle to another user but does not bind an account to the another user, the another user may unlock the vehicle by using an identity of a guest account. It should be noted that the guest account has preset fixed permission (usually lowest permission to use the vehicle).

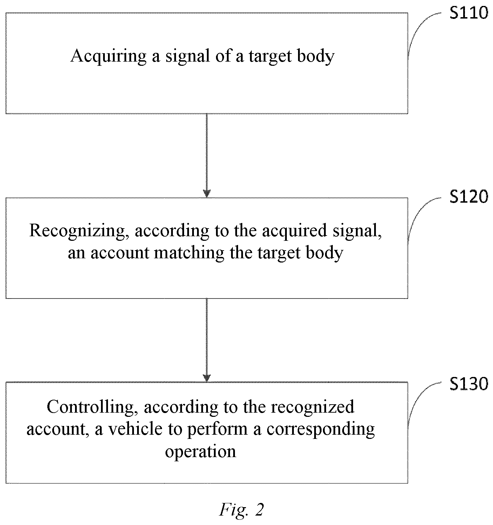

The invention further provides a vehicle control method based on identity recognition. Referring to FIG. 2, FIG. 2 is a flowchart of a vehicle control method based on identity recognition of the invention. As shown in FIG. 2, the vehicle control method of the invention comprises the following steps: S110: acquiring a signal of a target body; S 120: recognizing, according to the acquired signal, an account matching the target body; and S130: controlling, according to the recognized account, a vehicle to perform a corresponding operation. The account is a pre-created account capable of being bound to the target body.

As an example, the account comprises a primary account, a secondary account, and a guest account. For a more specific embodiment of the vehicle control method of the invention, reference is made to the above description. Details will not be described herein again. However, the vehicle control method of the invention is not limited to the specific embodiment described above. For example, user preference setting data corresponding to an account bound to a vehicle key may be stored by a central control system, and a vehicle body control module records a binding relationship between a signal of the vehicle key and the corresponding account. Those skilled in the art can adopt any appropriate manner to implement the vehicle control method of the invention.

The invention further discloses a processing device, comprising a processor and a storage apparatus, the processor being adapted to execute various programs; and the storage apparatus being adapted to store a plurality of programs, wherein the programs are adapted to be loaded and executed by the processor to implement the above vehicle control method.

The invention further discloses a storage device in which a plurality of programs are stored, wherein the programs are adapted to be loaded and executed by a processor to implement the above vehicle control method.

The method or algorithm steps described with reference to the embodiments disclosed herein may be implemented by hardware, a software module executed by a processor, or a combination of both. The software module may be arranged in a random access memory (RAM), a memory, a read-only memory (ROM), an electrically programmable ROM, an electrically erasable programmable ROM, a register, a hard disk, a removable disk, a CD-ROM, or any other form of storage medium known in the technical field.

It will be clearly understood by those skilled in the art that for the convenience and brevity of the description, for the specific working process and related description of the storage device in the embodiment of the invention, reference may be made to the corresponding process in the above-mentioned embodiment of the vehicle control method, which have the same beneficial effects as the above vehicle control method, and will not be described herein again.

Heretofore, the technical solutions of the invention have been described with reference to the preferred embodiments shown in the accompanying drawings; however, those skilled in the art can readily understand that the scope of protection of the invention is obviously not limited to these specific embodiments. Those skilled in the art can make equivalent changes or substitutions to the related technical features without departing from the principles of the invention, and all the technical solutions after the changes or substitutions will fall within the scope of protection of the invention.

## Claims

1. A vehicle control system based on identity recognition, **characterized in that** the vehicle control system comprises a target body signal acquisition module, an identity recognition module, a control module, and a vehicle regulation module,
the target body signal acquisition module being configured to acquire a signal of a target body;
the identity recognition module being configured to recognize, according to the signal acquired by the target body signal acquisition module, an account bound to the target body;
the control module being configured to send an instruction to the vehicle regulation module according to the account recognized by the identity recognition module; and
the vehicle regulation module being configured to receive and execute the instruction sent by the control module,
wherein the account is a pre-created account capable of being bound to the target body.

2. The vehicle control system according to claim 1, **characterized in that** the target body is a vehicle key or a user terminal, and the target body signal acquisition module detects a signal sent by the vehicle key or the user terminal, thus acquiring the signal of the target body.

3. The vehicle control system according to claim 1, **characterized in that** the account is preset with at least a user preference setting;
the control module sends the instruction to the vehicle regulation module according to the preference setting; and
the vehicle regulation module sends a regulation signal to a device to be regulated in a vehicle according to the instruction sent by the control module, so that the device to be regulated performs corresponding regulation.

4. The vehicle control system according to claim 3, **characterized in that** the account comprises at least a primary account and a secondary account,
the primary account and the secondary account being preset with a default preference setting; or
the primary account and the secondary account being preset with a customized preference setting.

5. The vehicle control system according to claim 4, **characterized in that** the account further comprises a guest account,
when the guest account is activated, the control module sending the instruction to the vehicle regulation module according to the guest account if the identity recognition module has not recognized the account bound to the target body and the target body is valid.

6. The vehicle control system according to claim 5, **characterized by** further comprising an account management module,
the account management module being configured to create or close the secondary account, and
assign user usage permission to the primary account/secondary account/guest account and/or preset a user preference setting for the primary account/secondary account/guest account.

7. The vehicle control system according to any of claims 1 to 6, **characterized by** further comprising a binding module,
the binding module being configured to establish or disconnect a binding relationship between the target body and a pre-created account.

8. A vehicle control method based on identity recognition, **characterized in that** the vehicle control method comprises the following steps:
acquiring a signal of a target body;
recognizing, according to the signal, an account bound to the target body; and
controlling, according to the account, a vehicle to perform a corresponding operation,
wherein the account is a pre-created account capable of being bound to the target body.

9. The vehicle control method according to claim 8, **characterized in that** the target body is a vehicle key or a user terminal, and the step of "acquiring a signal of a target body" specifically comprises:
detecting a signal of the vehicle key or the user terminal; and
using the detected signal of the vehicle key or the user terminal as the signal of the target body.

10. The vehicle control method according to claim 8, **characterized in that** the step of "controlling, according to the account, a vehicle to perform a corresponding operation" specifically comprises:
acquiring a preset user preference setting of the account; and
controlling a device to be regulated in the vehicle according to the preference setting to perform corresponding regulation.

11. The vehicle control method according to claim 10, **characterized in that** before the "acquiring a signal of a target body", the vehicle control method further comprises:
presetting a user preference setting for a pre-created account.

12. The vehicle control method according to claim 8, **characterized in that** the account comprises at least a primary account and a secondary account,
the primary account and the secondary account being preset with a default preference setting; or
the primary account and the secondary account being preset with a customized preference setting.

13. The vehicle control method according to claim 12, **characterized in that** the step of "recognizing, according to the signal, an account bound to the target body" specifically comprises:
determining, if the account bound to the target body has not been recognized, whether the target body is valid; and
using, if the target body is valid, a guest account as the account bound to the target body; or rejecting, if the target body is not valid, an operation of the target body,
wherein the guest account is a preset account with fixed permission.

14. The vehicle control method according to any of claims 8 to 13, **characterized in that** before the "acquiring a signal of a target body", the vehicle control method further comprises:
binding the pre-created account to the target body.

15. A processing device, comprising a processor and a storage apparatus, the processor being adapted to execute various programs; and the storage apparatus being adapted to store a plurality of programs, **characterized in that**
the programs are adapted to be loaded and executed by the processor to implement the vehicle control method according to any of claims 8 to 14.

16. A storage device in which a plurality of programs are stored, **characterized in that** the programs are adapted to be loaded and executed by a processor to implement the vehicle control method according to any of claims 8 to 14.
